# FASCICULE DE BREVET EUROPEEN

(11) **EP 2 118 616 B1**
(45) Date de publication et mention de la délivrance du brevet: **09.06.2010**
(21) Numéro de dépôt: 08775593.0
(22) Date de dépôt: 22.02.2008
(51) Int. Cl.: F41H 11/16

(54) **ENGIN DE DEMINAGE NOTAMMENT POUR MINES ANTIPERSONNEL**
INSBESONDERE FÜR ANTI-PERSONEN-MINEN KONZIPIERTES MINENRÄUMUNGSFAHRZEUG
MINE CLEARING VEHICLE INTENDED IN PARTICULAR FOR ANTI-PERSONNEL MINES

(30) Priorité: 01.03.2007 FR 0701511
(43) Date de publication de la demande: 18.11.2009
(73) Titulaire: Hovaguimian, Rouben, 27 rue du 14 juillet 94140 Alforville (FR); Hans, André, 5 Impasse Bérénice 78180 Montigny Le Bretonneux (FR)
(72) Inventeur: Hovaguimian, Rouben, 27 rue du 14 juillet 94140 Alforville (FR); Hans, André, 5 Impasse Bérénice 78180 Montigny Le Bretonneux (FR)
(74) Mandataire: de Saint-Palais, Arnaud Marie
(86) Numéro de dépôt international: PCT/FR2008/000242
(87) Numéro de publication internationale: WO 2008/125756

(56) Documents cités:
- EP-A- 0 971 198
- BE-A- 459 207
- FR-A- 2 851 036
- GB-A- 2 294 910

## Description

La présente invention concerne un engin de déminage utilisable, notamment mais non exclusivement, à la destruction de mines antipersonnel, par déclenchement de leur système de mise à feu. Un tel engin est connu de la demande de brevet FR 28 51036 A.

D'une façon générale, on sait que depuis des décennies, les militaires ont conçu des équipements montés à l'avant d'engins blindés afin de sécuriser la progression de leurs troupes et de leurs moyens militaires, au travers de terrains minés. En général, ces engins consistent en des fléaux rotatifs, c'est-à-dire des tambours munis de chaînes tournant à grande vitesse pour frapper le sol, dans le but de détruire aussi bien des mines antipersonnel que des mines antichars.

Pour un usage « non militaire », c'est-à-dire pour déminer d'anciens théâtres d'opérations après un conflit, un système similaire a été conçu pour équiper des engins agricoles. Ce sont des équipements lourds et coûteux munis de boucliers blindés pour protéger le pilote et son engin. Les militaires utilisent également d'autres équipements à l'avant de leurs engins blindés. L'un consiste en un rideau de chaînes auxquelles sont suspendues des masses traînant au sol, l'autre consiste en un tambour poussé non motorisé constitué d'un ensemble de disques métalliques, libres de glisser l'un par rapport à l'autre, afin d'épouser le relief du sol. Cette technique ne permet ni de franchir des obstacles, ni d'opérer en terrain meuble sableux ou rocailleux.

D'autres manières de procéder au déminage sont également à l'usage. Elles consistent à localiser par des technologies de détection magnétique ou autres les mines dissimulées dans un terrain au moyen d'un engin piloté à distance. Un démineur viendra ensuite neutraliser les mines localisées simplement par des fanions plantés au sol, ou par système satellitaire comme le GPS (Global Positioning System).

Ces matériels ont recours à des technologies de détection de mines sophistiquées, le déminage ensuite demeure manuel.

On constate donc que les technologies utilisées à l'heure actuelle sont soit sophistiquées ou coûteuses, soit insuffisamment adaptées aux terrains difficiles et accidentés, notamment pour nettoyer des zones pastorales, en basse montagne, parsemés de pierres, pris par les ronces, et éventuellement encombrés de barbelés.

L'invention a donc plus particulièrement pour but de supprimer ces inconvénients et propose donc à cet effet un engin de déminage particulièrement adapté aux reliefs accidentés et conçu pour être passe-partout, petit et maniable, robuste et d'un coût réduit, sa simplicité permettant de simplifier son entretien, sa maintenance ainsi que sa fabrication.

Selon l'invention, cet engin de déminage comprend au moins un train de roulement comportant un tambour composé d'un ensemble de disques flottants, par exemple en acier, disposés côte à côte sensiblement coaxialement, et mobiles radialement les uns par rapport aux autres, ces disques comportant chacun un orifice central dans lequel passent des moyens d'entraînement rotatifs qui s'étendent axialement d'une extrémité à l'autre du tambour et qui sont couplés à une motorisation, ces moyens d'entraînement présentant des surfaces de butée qui coopèrent avec des surfaces de butée prévues dans les disques, au niveau des susdits orifices, de manière à ce que lesdits moyens assurent l'entraînement de chacun des disques en rotation tout en leur autorisant un degré de liberté radial par rapport à l'axe des moyens d'entraînement rotatifs.

Ainsi, grâce à la mobilité radiale des disques qui leur permet d'exercer une pression en tout point sur le sol quel qu'en soit le profil, le tambour peut épouser les reliefs du sol difficiles tels que ceux des zones pastorales de basse montagne, pierreuses et accidentées pour lesquels les engins existants s'avèrent peu efficaces.

Avantageusement, les orifices des disques pourront présenter une forme oblongue ou une forme polygonale à côtés curvilignes. Ainsi, par exemple, ces orifices pourront présenter la forme d'un triangle curviligne à côtés concaves et dont les sommets sont arrondis. Dans ce cas, les moyens d'actionnement pourront consister en un arbre tripode de section plus réduite par rapport à celle desdits orifices. Cet arbre tripode pourra être remplacé par une structure rotative comportant trois cylindres parallèles dont les axes définissent un prisme isocèle, ces trois cylindres engrenant avec les disques de la même manière que l'axe tripode.

Eventuellement, des garnitures intercalaires réalisées en matière non sujette à la corrosion et possédant des propriétés anti-friction pourront recouvrir ou revêtir au moins une face de chaque disque métallique, afin de prévenir le collage des disques les uns aux autres. Ces fines garnitures pourront être en bronze ou en carbone fluoré par exemple

Avantageusement, l'engin pourra comprendre au moins deux trains de roulement, à savoir à l'avant un train constitué par un tambour du type de celui précédemment décrit, et à l'arrière un train de roulement quelconque (pouvant comprendre un ou plusieurs tambours). Cette solution permet en effet de protéger des explosions la partie de l'engin située en arrière du tambour avant, la masse et le degré de liberté des disques du tambour permettant d'absorber une partie de l'énergie cinétique libérée par l'explosion.

Au moins l'un des trains de roulement pourra être directionnel et être associé à l'autre (ou aux autres trains) par l'intermédiaire de pivoteries ou de moyens d'articulation, de manière à ce qu'il puise pivoter selon un axe vertical. Ces pivoteries et/ou articulations pourront être également conçues de manière à ce que le train directionnel puisse également pivoter selon un axe longitudinal. Eventuellement, l'engin pourra comprendre plusieurs trains directionnels.

Comme dans de nombreux engins de travaux publics, la motorisation de l'engin selon l'invention pourra être préférentiellement hydraulique et faire intervenir un ou plusieurs moteurs hydrauliques directement en prise avec les axes des tambours. Néanmoins, une transmission par chaînes pourra être prévue de manière à éloigner cette motorisation de la déflagration.

En outre, cet engin pourra être piloté à distance grâce à des moyens de télécommande de manière à supprimer tout risque au niveau du pilote. Il pourra comprendre des moyens pour le marquage des zones de passage de l'engin, par exemple par épandage d'une substance visible telle que de la craie ou de la chaux ou d'une matière colorante. De même, un système de prise de vues (caméra) couplé à des moyens de transmission pourra être embarqué sur l'engin de manière à ce que le pilote, équipé de moyens de réception et de visualisation puisse piloter l'engin à partir des images effectuées sur les moyens de visualisation. Un système de programmation des trajectoires pourra être incorporé sur le système embarqué pour gérer les déambulations de l'engin dans un espace en garantissant son passage en tout point de celui-ci. Ce dispositif de programmation de trajectoire pourra faire intervenir des moyens de géolocalisation par exemple de type GPS (Global Positioning System).

Des modes d'exécution de l'invention seront décrits ci-après à titre d'exemples non limitatifs, avec référence aux dessins annexés dans lesquels :
Les figures 1 et 2 sont des vues respectivement de dessous et de côté d'un engin selon l'invention télécommandé ;
La figure 3 est une représentation schématique illustrant le principe de fonctionnement de l'articulation reliant les deux parties de l'engin illustré sur les figures 1 et 2 ;
La figure 4 est une coupe axiale d'un tambour équipé de ses moyens d'entraînement ;
La figure 5 est une vue de côté d'une variante d'exécution d'un engin utilisant une centrale hydraulique modulaire ;
La figure 6 est une vue de côté d'un disque et de l'arbre d'entraînement qui lui est associé ;
La figure 7 est une vue, à plus grande échelle avec coupe partielle d'une fraction du disque illustré sur la figure 6 ;
La figure 8 est une vue partielle à plus grande échelle de la figure 6 dans le cas d'un montage à rupture de charge de la garniture ;
Les figures 9 et 10 sont des vues de côté et de dessous d'un engin équipé d'un poste de pilotage ;
Les figures 11 et 12 sont deux vues respectivement de côté et de dessous d'un engin en site dont un train de roulement est constitué par un tambour, et un deuxième train comprend deux roues orientables ; et
La figure 13 est une coupe axiale d'une variante d'exécution d'un tambour selon l'invention.

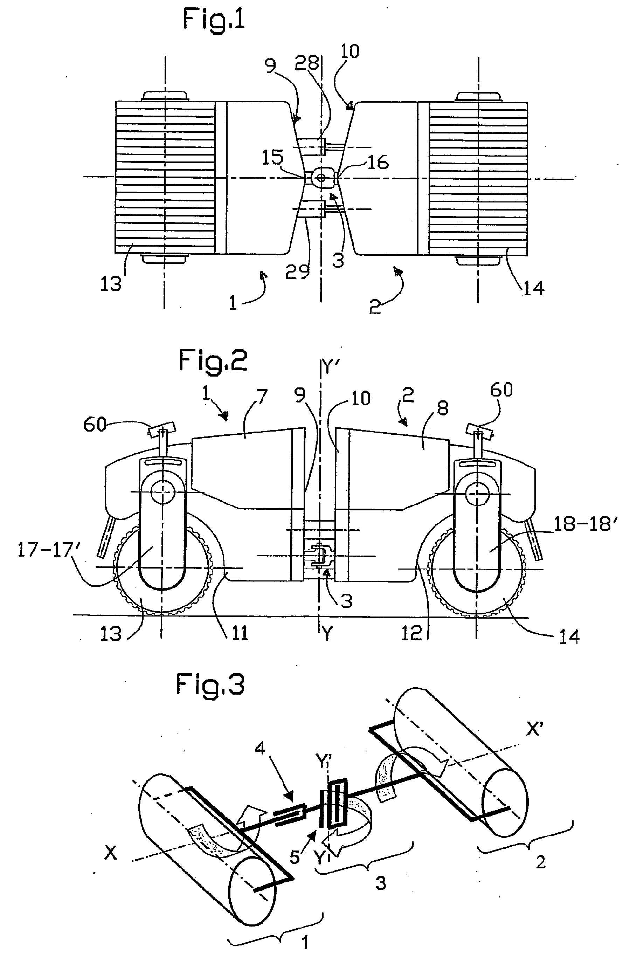

Dans l'exemple illustré sur les figures 1 à 3, l'engin se compose de deux parties 1, 2 sensiblement identiques reliées l'une à l'autre par l'intermédiaire d'une liaison articulée 3.

Comme illustré sur la figure 3, cette liaison articulée fait intervenir successivement un premier montage 4 pivotant autour d'un axe longitudinal X, X' et un deuxième montage 5 pivotant autour d'un axe transversal Y, Y'.

Chacune de ces deux parties 1, 2 comporte une structure carrossée 7, 8 présentant dans un plan vertical longitudinal de symétrie, une forme trapézoïdale rectangle se terminant du côté de sa liaison avec l'autre partie par une face verticale 9, 10, et comprenant de l'autre côté, dans sa partie inférieure, une cavité hémicylindrique transversale 11, 12 logeant partiellement un tambour rotatif 13, 14. Dans un plan horizontal, la face verticale 9, 10 présente la forme d'un dièdre dont l'arête s'étend verticalement dans le plan vertical longitudinal de symétrie. Cette forme est destinée à permettre un débattement angulaire de l'une des parties 1 par rapport à l'autre 2 (autour de l'axe transversal Y, Y').

Le montage rotatif du tambour 13, 14 sur la structure 7, 8 est assuré au moyen de deux ailes verticales 17-17', 18-18' qui s'étendent depuis la partie supérieure de la structure 7, 8 jusqu'au-delà de sa partie inférieure, au niveau de la cavité hémicylindrique 11, 12.

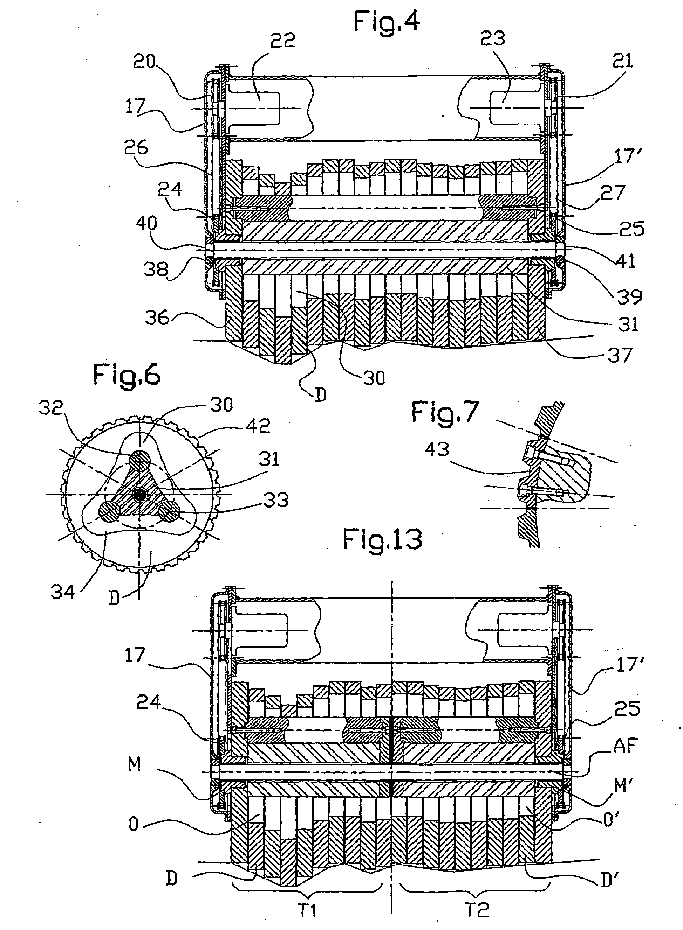

Comme ceci est visible sur la figure 4, ces deux ailes 17, 17' comportent chacune deux parois parallèles délimitant un volume interne logeant un pignon supérieur 20, 21 entraîné en rotation par un moteur hydraulique 22, 23, un pignon inférieur 24, 25 servant à l'entraînement en rotation du tambour et une chaîne 26, 27 passant autour des deux pignons 20, 21- 24, 25.

Au moins l'une des deux structures carrossées 7, 8 renferme une centrale hydraulique entraînée par un moteur thermique, cette centrale étant destinée à alimenter les moteurs en fluide hydraulique sous pression. Eventuellement, cette centrale hydraulique pourra être de type modulaire et être montée sur un support central articulé aux deux structures 7, 8.

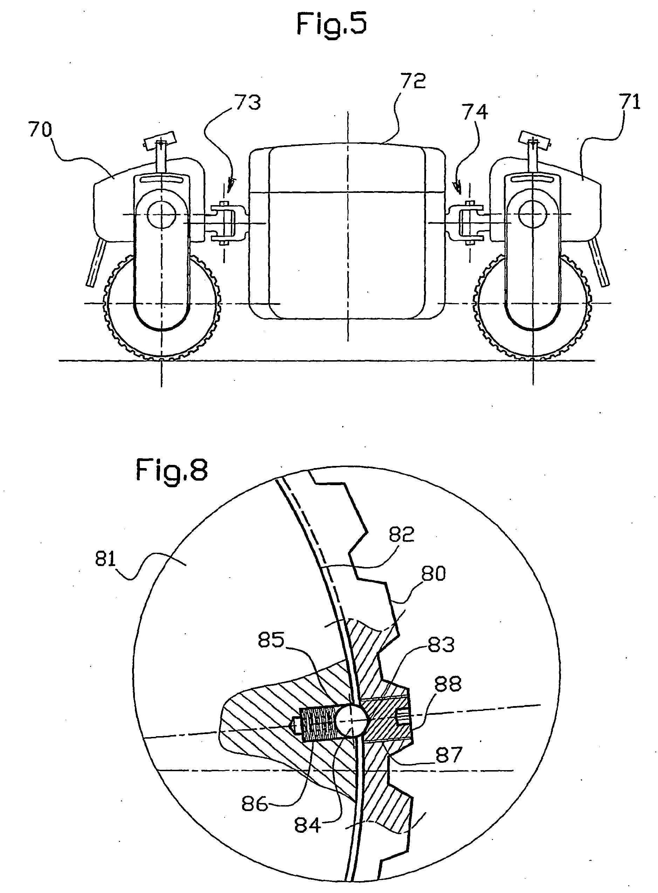

La figure 5 montre un engin de ce type comportant deux structures carrossées 70, 71 relativement légères équipées chacune d'un tambour et de son dispositif d'entraînement et un support central au moins partiellement blindé renfermant une centrale hydraulique 72. Les articulations 73 et 74 sont alors disposées dans les parties supérieures des structures carrossées 70, 71 et de l'armature de la centrale hydraulique 72. Les moteurs d'entraînement des tambours sont alimentés en fluide hydraulique sous pression provenant de la centrale 72 par l'intermédiaire de tubes flexibles (non représentés).

Dans l'exemple représenté sur la figure 1, les deux structures 7, 8 sont reliées l'une à l'autre, de part et d'autre de l'articulation 3, par deux vérins respectifs 28, 29, par exemple hydrauliques, électriques ou pneumatiques, destinés à modifier la position angulaire relative des deux parties, en vue de permettre la conduite de l'engin (ligne droite ou virage).

Le tambour se compose d'une multiplicité de disques en acier D disposés côte à côte et présentant chacun, comme illustré sur la figure 6, une cavité centrale 30 présentant une forme triangulaire à côtés curvilignes concaves et à angles incurvés.

Ces cavités 30 forment un passage dans lequel s'engage un arbre 31 dont la section présente une forme analogue à celle de la cavité 30, mais à échelle réduite. Toutefois dans ce cas, les régions angulaires incurvées de cet arbre 31 consistent ici en des rouleaux cylindriques 32, 33, 34.

L'arbre 31 est fixé à chacune de ses extrémités à un disque coaxial 36, 37 servant au maintien latéral des disques flottants D et à un pignon 24, 25. Son montage rotatif sur les ailes 17, 17' s'effectue grâce à des paliers 38, 39 dans lesquels s'engagent des tourillons 40, 41 le prolongeant coaxialement.

Comme ceci est visible sur les figures 6 et 7, chacun des disques flottants D porte à sa périphérie une garniture dentée 42 formée par une succession de segments démontables et interchangeables 43 fixés par vissage sur la tranche du disque D. Ces segments 43 pourront être réalisés en un matériau résilient et résistant tel qu'un caoutchouc ou un élastomère.

En alternative, la garniture pourra être montée sur le disque par l'intermédiaire d'une liaison à rupture de charge autorisant une rotation relative de la garniture par rapport au disque lorsque le couple s'exerçant entre ladite garniture et ledit disque s'élève au-delà d'un seuil prédéterminé.

La figure 8 montre une solution envisageable pour la réalisation d'une telle liaison à rupture de charge selon laquelle la garniture consiste en une couronne 80 de diamètre sensiblement égal au diamètre de la tranche du disque flottant 81 sur lequel il vient s'engager coaxialement.

La face intérieure cylindrique de cette couronne 80 est munie d'une gorge annulaire 82 dont le fond est muni d'au moins trois encoches 83 (voire de crantages). Dans cette gorge s'engage au moins une bille 84 ou analogue partiellement logée dans un logement borgne 85 de forme cylindrique axé radialement, qui est réalisé dans la tranche du disque 81. Cette bille 84 est sollicitée par un ressort de pression 86 ou des rondelles à compression de type Belleville prenant appui dans le fond du logement 85.

Cette bille 84 assume deux fonctions :
- Elle réalise un blocage latéral de la couronne 80 sur le disque 81 tout en autorisant une rotation relative couronne 80/disque 81.
- Elle assume la fonction de liaison à rupture de charge grâce à la présence des encoches 83 ou des crantages : Dès que le couple exercé entre la couronne 80 et le disque 81 s'élève au-dessus d'un seuil prédéterminé, déterminé par la raideur du ressort 86 et par la forme des encoches 83, la bille 84 se trouve repoussée dans le logement 86 et la couronne 80 peut tourner autour du disque 81, tout en étant retenue latéralement sur celui-ci du fait que la bille demeure engagée dans le logement 86.

Le montage de la couronne 80 sur le disque 81 est alors rendu possible grâce à des perçages radiaux taraudés 87 débouchant au droit de la gorge 82 et refermés par une vis sans tête 88. Grâce à cette disposition, les billes 84 peuvent être engagées dans leurs logements respectifs 86 après avoir disposé la couronne 80 sur le disque 81. A l'inverse, lorsqu'on veut ôter la garniture, il suffit de retirer les billes 84 après avoir enlevé les vis sans tête 88. Dans cet exemple, les encoches dans lesquelles s'engagent les billes sont réalisées en bout des vis sans tête 88.

Grâce aux dispositions précédemment décrites, les déplacements de l'engin sont assurés grâce à l'entraînement en rotation des tambours 13, 14 par l'intermédiaire de la chaîne cinématique comprenant les moteurs 22, 23, les pignons 20, 21 - 24, 25, la chaîne d'entraînement 27 et l'arbre tripode 31 dont la rotation engendre la rotation des disques D tout en autorisant leur déplacement radial relatif.

Cette liberté de déplacement radial permet au tambour d'épouser la forme du sol, et de faire en sorte que chaque disque vienne toujours en appui sur le sol, et ne puisse pas se soulever, ce qui engendrerait un risque de laisser sur le territoire traité des mines en activité. Le guidage de l'engin est alors assuré grâce à des moyens de guidage qui assurent la commande des vérins 28, 29 et qui sont pilotés à distance par un système de télécommande à liaison filaire ou à liaison sans fil, par exemple par radio.

Bien entendu, l'invention ne se limite pas au mode d'exécution précédemment décrit.

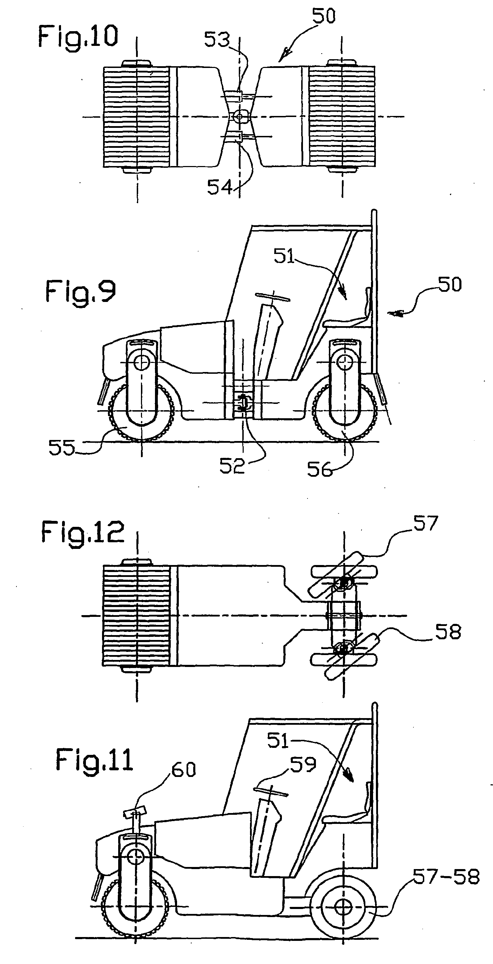

Ainsi, par exemple, l'engin pourrait présenter une structure analogue à celle d'un engin de travaux publics classique comportant (figures 9 et 10) une partie arrière 50 équipée d'une cabine de pilotage 51 et une partie avant du type de celle précédemment décrite, étant entendu que, dans ce cas, la cabine 51 est conçue de manière à protéger le conducteur contre les déflagrations. La liaison entre les deux parties est assurée de la même façon que précédemment, au moyen d'une double articulation 52 et d'un ou plusieurs vérins de commande de direction 53, 54 qui engendre un couple entre les deux parties par rapport à l'axe d'articulation vertical.

Dans cet exemple, les deux trains de roulement de cet engin consistent en des tambours 55, 56 similaires à ceux utilisés sur l'engin précédemment décrit.

Eventuellement, les deux parties de l'engin pourront être rigidement liées l'une à l'autre de manière à constituer une structure commune telle que celle illustrée figures 11 et 12. Dans ce cas, l'un des trains de roulement, de préférence le train arrière, est composé de roues orientables 57, 58, dont l'orientation est commandée par un volant 59 situé dans une cabine 60 prévue à l'arrière de la structure.

Bien entendu, les engins de déminage précédemment décrits pourront être équipés de caméras 60 ainsi que des moyens nécessaires pour transmettre des images vers l'écran de pilotage situé à bord de l'engin (dans le cas où il est équipé d'une cabine de pilotage) ou à distance de l'engin, notamment dans le cas où l'engin est télécommandé. Avantageusement, cette caméra 60 pourra être fixe ou à orientation commandable à distance par l'opérateur.

Ces engins de déminage pourront en outre comprendre un ou plusieurs dispositifs de détection tels que des moyens magnétiques connus pour le déminage manuel, ou d'autres moyens de détection tels que des matériels géophysiques tels que par exemple des conductivimètres, de manière à ce que tout engin non explosé soit détecté pour être signalé aux personnels de déminage en vue d'être neutralisé manuellement.

Par ailleurs, les tambours précédemment décrits pourront éventuellement comprendre au moins deux tronçons comportant chacun un ensemble de disques flottants du type de ceux précédemment décrits disposés côte à côte et mobiles radialement les uns par rapport aux autres.

Dans l'exemple représenté figure 13, ces deux tronçons T₁, T₂ sont montés rotatifs autour d'un axe fixe AF qui passe au travers des orifices O, O' des disques D, D' pour venir se fixer par ses extrémités sur les ailes 17, 17'.

L'entraînement en rotation des tronçons T₁, T₂ est assuré au moyen de deux manchons M, M' montés rotatifs autour de l'axe AF et respectivement couplés aux pignons 24, 25.

La forme extérieure des manchons M, M' correspond à celle des moyens d'entraînement précédemment décrits.

L'avantage de cette solution consiste en ce que l'entraînement en rotation d'un tronçon T₁ est indépendant de l'entraînement de l'autre tronçon T₂. Il est donc possible d'obtenir un guidage de l'engin en jouant seulement sur la vitesse de rotation relative entre les deux tronçons (à la façon de chenilles).

## Revendications

1. Engin de déminage utilisable, notamment mais non exclusivement, à la destruction de mines antipersonnel, par déclenchement de leur système de mise à feu, cet engin comprenant au moins un train de roulement comportant un tambour (13, 14) composé d'un ensemble de disques flottants (D), par exemple en acier, disposés côte à côte sensiblement coaxialement, et mobiles radialement les uns par rapport aux autres,
**caractérisé en ce que** ces disques (D) comportent chacun un orifice central (30) dans lequel passent des moyens d'entraînement rotatifs (31) qui s'étendent axialement d'une extrémité à l'autre du tambour (13, 14) et qui sont couplés à une motorisation, ces moyens d'entraînement (31) présentant des surfaces de butée qui coopèrent avec des surfaces de butée prévues dans les disques (D), au niveau des susdits orifices (30), de manière à ce que lesdits moyens (31) assurent l'entraînement en rotation de chacun des disques (D) tout en leur autorisant un degré de liberté radial par rapport à l'axe des moyens d'entraînement rotatifs (31).

2. Engin selon la revendication 1,
**caractérisé en ce que** les orifices (30) des disques (D) présentent une forme oblongue ou une forme polygonale à côtés curvilignes.

3. Engin selon l'une des revendications 1 et 2,
**caractérisé en ce que** les susdits orifices (30) présentent la forme d'un triangle curviligne à côtés concaves et dont les sommets sont arrondis.

4. Engin selon la revendication 3,
**caractérisé en ce que** les moyens d'entraînement (31) comprennent un arbre tripode de section réduite par rapport à celle des susdits orifices (30).

5. Engin selon la revendication 3,
**caractérisé en ce que** les moyens d'entraînement (31) comportent trois cylindres (32, 33, 34) parallèles dont les axes définissent un prisme isocèle.

6. Engin selon la revendication 5,
**caractérisé en ce que** les susdits cylindres (32, 33, 34) sont fixés à leurs extrémités à deux disques coaxiaux (36, 37) servant au maintien latéral des disques flottants (D).

7. Engin selon l'une des revendications précédentes,
**caractérisé en ce que** des garnitures intercalaires réalisées en matière non sujette à la corrosion et possédant des propriétés anti-friction recouvrent ou revêtent au moins une face de chaque disque métallique (D), afin de prévenir le collage des disques les uns aux autres.

8. Engin selon l'une des revendications précédentes,
**caractérisé en ce que** chacun des disques flottants (D) porte à sa périphérie une garniture dentée (42) formée par une succession de segments démontables et interchangeables (43) fixés sur la tranche du disque (D).

9. Engin selon l'une des revendications 1 à 7,
**caractérisé en ce que** la garniture (80) est montée sur le disque (81) par l'intermédiaire d'une liaison à rupture de charge autorisant une rotation relative de la garniture (80) par rapport au disque (81) lorsque le couple s'exerçant entre ladite garniture (80) et ledit disque (81) s'élève au-delà d'un seuil prédéterminé.

10. Engin selon l'une des revendications précédentes,
**caractérisé en ce que** le susdit tambour est formé en plusieurs tronçons (T₁, T₂) comportant chacun un ensemble de disques flottants (D, D') disposés côte à côte et mobiles radialement les uns par rapport aux autres, ces disques (D, D') comprenant chacun un orifice central (O, O') par lequel passent des moyens d'entraînement rotatifs indépendants pour chacun des tronçons (T₁, T₂).

11. Engin selon l'une des revendications précédentes,
**caractérisé en ce qu'**il comprend au moins deux trains de roulement, à savoir à l'avant un train constitué par un tambour du type de celui précédemment décrit, et à l'arrière un train de roulement quelconque pouvant comprendre un ou plusieurs tambours.

12. Engin selon la revendication 11,
**caractérisé en ce que** au moins l'un des trains de roulement est directionnel et est associé à l'autre par l'intermédiaire d'au moins une articulation (5) à axe vertical.

13. Engin selon la revendication 12,
**caractérisé en ce que** la susdite articulation comprend en outre une pivoterie (4) axée longitudinalement.

14. Engin selon l'une des revendications précédentes,
**caractérisé en ce qu'**il comprend une motorisation comprenant un ou plusieurs moteurs (22, 23) en prise avec les susdits moyens d'entraînement (31), soit directement, soit par l'intermédiaire d'une transmission par chaînes.

15. Engin selon l'une des revendications précédentes,
**caractérisé en ce qu'**il comprend deux parties (1, 2) comportant chacune un train de roulement dont l'un au moins consiste en un tambour (13, 14) du type susdit, ces deux parties (1, 2) étant reliées l'une à l'autre par l'intermédiaire d'une liaison articulée (3) comportant au moins une pivoterie à axe vertical.

16. Engin selon la revendication 15,
**caractérisé en ce que** la susdite liaison articulée comprend en outre une pivoterie à axe longitudinal (X, X').

17. Engin selon l'une des revendications 15 et 16,
**caractérisé en ce qu'**il comprend au moins un vérin (28, 29) qui engendre entre les deux parties (1, 2) un couple par rapport à l'axe de rotation vertical (Y, Y').

18. Engin selon l'une des revendications 1 à 14,
**caractérisé en ce qu'**il comprend une structure commune équipée de deux trains de roulement, l'un des deux trains, de préférence le train avant comprenant le susdit tambour et le deuxième train, de préférence le train arrière comprenant des roues à orientation commandable (57, 58).

19. Engin selon la revendication 18,
**caractérisé en ce que** le deuxième train comprend une cabine de pilotage équipée d'un volant (59) servant à commander l'orientation des susdites roues (57, 58).

20. Engin selon l'une des revendications 1 à 14,
**caractérisé en ce qu'**il comprend deux parties (70, 71) comprenant chacune un train de roulement comportant au moins un tambour du type susdit, ces deux parties (70, 71) étant articulées à une partie médiane (72) comportant une centrale hydraulique.

21. Engin selon l'une des revendications 1 à 18,
**caractérisé en ce qu'**il comprend des moyens de télécommande à distance par liaison filaire ou par liaison radio.

22. Engin selon l'une des revendications précédentes,
**caractérisé en ce qu'**il comprend au moins une caméra (60) ainsi que des moyens nécessaires pour transmettre des images vers l'écran de pilotage situé à bord de l'engin dans le cas où il est équipé d'une cabine de pilotage ou à distance de l'engin, notamment dans le cas où l'engin est télécommandé.

23. Engin selon la revendication 22,
**caractérisé en ce que** la susdite caméra (60) est fixe ou à orientation commandable à distance.

24. Engin selon l'une des revendications précédentes,
**caractérisé en ce qu'**il comprend un ou plusieurs dispositifs de détection tels que des moyens magnétiques connus pour le déminage manuel, ou d'autres moyens de détection tels que des matériels géophysiques tels que par exemple des conductivimètres, de manière à ce que tout engin non explosé soit détecté pour être signalé aux personnels de déminage en vue d'être neutralisé manuellement.

25. Engin selon l'une des revendications précédentes,
**caractérisé en ce qu'**il comprend des moyens pour le marquage des zones de passage de l'engin, par exemple par épandage d'une substance visible telle que de la craie ou de la chaux ou d'une matière colorante.

26. Engin selon l'une des revendications précédentes,
**caractérisé en ce qu'**il comprend un système de programmation des trajectoires incorporé sur le système embarqué pour gérer les déambulations de l'engin dans un espace en garantissant son passage en tout point de celui-ci.

## Claims

1. A mine clearing vehicle which can be used in particular, but not exclusively, to destroy antipersonal mines by triggering the mine firing system, this vehicle comprising at least one running gear including a drum (13, 14) formed by a set of floating disks (D), which can be made of steel, for example, which are positioned substantially coaxially side by side, and radially mobile relative to one another,
**characterized in that** these disks (D) each include a central hole (30) through which the rotary drive means (31) pass, wherein said drive means extend axially from one end of the drum (13, 14) to the other and are coupled to a power unit, said drive means (31) having stop surfaces which cooperate with stop surfaces provided on the disks (D), at said holes (30), such that said means (31) rotate each of the disks (D) while providing the latter parts with a degree of radial freedom in relation to the axis of the rotary drive means (31).

2. The vehicle according to claim 1,
**characterized in that** the holes (30) of the disks (D) have an oblong shape or a polygonal shape with curvilinear sides.

3. The vehicle according to one of claims 1 and 2,
**characterized in that** said holes (30) assume the form of a curvilinear triangle with concave sides and the apices of which are rounded.

4. The vehicle according to claim 3,
**characterized in that** the drive means (31) comprise a tripod shaft of reduced section relative to that of said holes (30).

5. The vehicle according to claim 3,
**characterized in that** the drive means (31) include three parallel cylinders (32, 33, 34) whereof the shafts define an isosceles prism.

6. The vehicle according to claim 5,
**characterized in that** said cylinders (32, 33, 34) are fastened at their ends to two coaxial disks (36, 37) serving to laterally hold the floating disks (D).

7. The vehicle according to one of the preceding claims,
**characterized in that** insert fittings made from a material not subject to corrosion and having anti-friction properties cover or coat at least one face of each metal disk (D), in order to prevent the disks from sticking to each other.

8. The vehicle according to one of the preceding claims,
**characterized in that** each of the floating disks (D) bears, at its periphery, a toothed fitting (42) formed by a succession of disassemblable and interchangeable segments (43) fastened on the section of the disk (D).

9. The vehicle according to one of claims 1 to 7,
**characterized in that** the fitting (80) is mounted on the disk (81) via a load break connection allowing a relative rotation of the fitting (80) in relation to the disk (81) when the torque exerted between said fitting (80) and said disk (81) rises above a predetermined threshold.

10. The vehicle according to one of the preceding claims,
**characterized in that** the aforementioned drum is made up of several sections (T₁, T₂) each including a set of floating disks (D, D') arranged side by side and radially mobile relative to each other, these disks (D, D') each comprising a central hole (O, O') through which independent rotary drive means for each of the sections (T₁, T₂) pass.

11. The vehicle according to one of the preceding claims,
**characterized in that** it comprises at least two running gears, i.e. in front a gear formed by a drum of the type previously described, and in the rear any running train whatsoever able to comprise one or several drums.

12. The vehicle according to claim 11,
**characterized in that** at least one of the running trains is directional and is associated with the other via at least one articulation (5) with vertical axis.

13. The vehicle according to claim 12,
**characterized in that** the aforementioned articulation also comprises a longitudinally centered pivot assembly (4).

14. The vehicle according to one of the preceding claims,
**characterized in that** it comprises a power unit comprising one or several engines (22, 23) engaged with the aforementioned drive means (31), either directly or through a chain drive.

15. The vehicle according to one of the preceding claims,
**characterized in that** it comprises two portions (1, 2) each including a running gear at least one of which consists of a drum (13, 14) of the aforementioned type, these two portions (1, 2) being connected to each other via an articulated connection (3) including at least one pivot mechanism with vertical axis.

16. The vehicle according to claim 15,
**characterized in that** the aforementioned articulated connection also comprises a pivot assembly with longitudinal axis (X, X').

17. The vehicle according to one of claims 15 and 16,
**characterized in that** it comprises at least one cylinder (28, 29) which creates, between the two portions (1, 2), a torque relative to the vertical axis of rotation (Y, Y').

18. The vehicle according to one of claims 1 to 14,
**characterized in that** it comprises a shared structure equipped with two running gears, one of the two gears, preferably the front gear, comprising the aforementioned drum and the second gear, preferably the rear gear, comprising wheels with controllable orientation (57, 58).

19. The vehicle according to claim 18,
**characterized in that** the second gear comprises a driver's cab equipped with a steering wheel (59) used to control the orientation of the aforementioned wheels (57, 58).

20. The vehicle according to one of claims 1 to 14,
**characterized in that** it comprises two portions (70, 71) each comprising a running gear including at least one drum of the aforementioned type, these two portions (70, 71) being articulated to a median portion (72) including a hydraulic unit.

21. The vehicle according to one of claims 1 to 18,
**characterized in that** it comprises remote control means via a wired connection or radio connection.

22. The vehicle according to one of the preceding claims,
**characterized in that** it comprises at least one camera (60) as well as means necessary to transmit images to the driver's screen situated onboard the vehicle, in the event it is equipped with a driver's cab, or remote from the vehicle, in particular in the case where the vehicle is remote controlled.

23. The vehicle according to claim 22,
**characterized in that** the aforementioned camera (60) is fixed or has a remotely controllable orientation.

24. The vehicle according to one of the preceding claims,
**characterized in that** it comprises one or several detection device such as magnetic means known for manual mine clearing, or other detection means such as geophysical materials such as, for example, conductivity meters, such that any unexploded device will be detected to be signaled to the mine clearing personnel in order to be manually neutralized.

25. The vehicle according to one of the preceding claims,
**characterized in that** it comprises means for marking zones for passage of the vehicle, for example by spreading a visible substance such as chalk or lime or a dye agent.

26. The vehicle according to one of the preceding claims,
**characterized in that** it comprises a system for programming paths incorporated in the onboard system to manage the travel of the vehicle in a space while guaranteeing its passage over all points thereof.

## Patentansprüche

1. Minenräumgerät, das, insbesondere, jedoch nicht ausschließlich, zur Zerstörung von Antipersonenminen, durch Auslösung ihres Zündsystems verwendbar ist, wobei dieses Gerät mindestens einen Rollengang umfasst, der mindestens eine Walze (13, 14) umfasst, die aus einer Gesamtheit von losen Scheiben (D), beispielsweise aus Stahl, besteht, die hintereinander im Wesentlichen koaxial angeordnet und gegenseitig radial beweglich sind,
**dadurch gekennzeichnet, dass** diese Scheiben (D) jeweils eine zentrale Öffnung (30) umfassen, durch die hindurch Drehantriebsmittel (31) verlaufen, die sich axial von einem Ende zum anderen Ende der Walze (13, 14) erstrecken und die mit einer Motorisierung gekoppelt sind, wobei diese Antriebsmittel (31) Anschlagflächen aufweisen, die mit Anschlagflächen kooperieren, die in den Scheiben (D) an den Öffnungen (30) vorgesehen sind, derart, dass die Mittel (31) den Drehantrieb von jeder der Scheiben (D) gewährleisten und ihnen dennoch ein radialer Freiheitsgrad bezüglich der Achse der Drehantriebsmittel (31) erlaubt ist.

2. Gerät nach Anspruch 1,
**dadurch gekennzeichnet, dass** die Öffnungen (30) der Scheiben (D) eine längliche Form oder eine polygonale Form mit gekrümmten Seiten aufweisen.

3. Gerät nach einem der Ansprüche 1 und 2,
**dadurch gekennzeichnet, dass** die oben genannten Öffnungen (30) die Form eines gekrümmten Dreiecks mit konkaven Seiten, deren Ecken abgerundet sind, aufweisen.

4. Gerät nach Anspruch 3,
**dadurch gekennzeichnet, dass** die Antriebsmittel (31) eine dreibeinige Welle mit, bezogen auf denjenigen der oben genannten Öffnungen (30), reduziertem Querschnitt aufweisen.

5. Gerät nach Anspruch 3,
**dadurch gekennzeichnet, dass** die Antriebsmittel (31) drei parallele Zylinder (32, 33, 34) umfassen, deren Achsen ein gleichschenkliges Prisma definieren.

6. Gerät nach Anspruch 5,
**dadurch gekennzeichnet, dass** die oben genannten Zylinder (32, 33, 34) mit ihren Enden an zwei koaxialen Scheiben (36, 37) befestigt sind, die dem seitlichen Halt der losen Scheiben (D) dienen.

7. Gerät nach einem der vorhergehenden Ansprüche,
**dadurch gekennzeichnet, dass** Zwischenbeläge, die aus korrosionsfreiem Material realisiert sind und die Antifriktionseigenschaften besitzen, mindestens eine Frontfläche von jeder Metallscheibe (D) bedecken oder überziehen, um das Aneinanderkleben der Scheiben zu verhindern.

8. Gerät nach einem der vorhergehenden Ansprüche,
**dadurch gekennzeichnet, dass** die losen Scheiben jeweils an ihrem Umfang einen gezahnten Beschlag (42) tragen, der von einer Abfolge von abnehmbaren und austauschbaren Segmenten (43) gebildet ist, die auf dem Rand der Scheibe (D) befestigt sind.

9. Gerät nach einem der Ansprüche 1 bis 7,
**dadurch gekennzeichnet, dass** der Belag (80) auf der Scheibe (81) über eine Belastungswechselverbindung befestigt ist, die eine relative Rotation des Belags (80) bezüglich der Scheibe (81) erlaubt, wenn das zwischen Belag (80) und Scheibe (81) ausgeübte Drehmoment über einen vorbestimmten Schwellwert ansteigt.

10. Gerät nach einem der vorhergehenden Ansprüche,
**dadurch gekennzeichnet, dass** die oben genannte Walze aus mehren Teilstücken (T₁, T₂) geformt ist, die jeweils eine Gesamtheit von losen Scheiben (D, D') tragen, die nebeneinander und untereinander radial beweglich angeordnet sind, wobei diese Scheiben (D, D') jeweils eine zentrale Öffnung (O, O') umfassen, durch die hindurch für jedes Teilstück (T₁, T₂) unabhängige Rotationsantriebmittel verlaufen.

11. Gerät nach einem der vorhergehenden Ansprüche,
**dadurch gekennzeichnet, dass** es mindestens zwei Rollengänge umfasst, nämlich vorne einem Gang, bestehend aus einer Walze des zuvor beschriebenen Typs, und hinten einen beliebigen Rollengang, der eine oder mehrere Walzen umfassen kann.

12. Gerät nach Anspruch 11,
**dadurch gekennzeichnet, dass** mindestens einer der Rollgänge Richtwirkung besitzt und mit dem anderen über mindestens eine Gelenkverbindung (5) mit vertikaler Achse zusammenhängt.

13. Gerät nach Anspruch 12,
**dadurch gekennzeichnet, dass** die oben genannte Gelenkverbindung weiterhin eine Traglagereinheit (4) mit Längsachse umfasst.

14. Gerät nach einem der vorhergehenden Ansprüche,
**dadurch gekennzeichnet, dass** es eine Motorisierung umfasst, umfassend einen oder mehrere Motoren (22, 23) in Kontakt mit den oben genannten Antriebsmitteln (31), entweder direkt oder über eine Übersetzung durch Ketten.

15. Gerät nach einem der vorhergehenden Ansprüche,
**dadurch gekennzeichnet, dass** es zwei Teile (1, 2) umfasst, die jeweils einen Rollengang umfassen, wovon der eine mindestens aus einer Walze (13, 14) des oben genannten Typs besteht, wobei diese beiden Teile (1, 2) über eine Gelenkverbindung (3) miteinander verbunden sind, die mindestens eine Traglagereinheit mit vertikaler Achse umfasst.

16. Gerät nach Anspruch 15,
**dadurch gekennzeichnet, dass** die oben genannte Gelenkverbindung weiterhin eine Traglagereinheit mit Längsachsen (X, X') umfasst.

17. Gerät nach einem der Ansprüche 15 und 16,
**dadurch gekennzeichnet, dass** es mindestens ein Stellglied (28, 29) umfasst, das zwischen den beiden Teilen (1, 2) ein Drehmoment bezüglich der vertikalen Rotationsachse (Y, Y') erzeugt.

18. Gerät nach einem der Ansprüche 1 bis 14,
**dadurch gekennzeichnet, dass** es eine gemeinsame Struktur umfasst, die mit zwei Rollgängen versehen ist, wobei einer der beiden Gänge, vorzugsweise der vordere Gang, die oben genannte Walze umfasst, und der zweite Gang, vorzugsweise der hintere Gang, steuerbare Orientierungsräder (57, 58) umfasst.

19. Gerät nach Anspruch 18,
**dadurch gekennzeichnet, dass** der zweite Gang eine Lotsenkabine umfasst, die mit einem Steuerrad (59) ausgestattet ist, das dazu dient, die Orientierung der oben genannten Räder (57, 58) zu steuern.

20. Gerät nach einem der Ansprüche 1 bis 14,
**dadurch gekennzeichnet, dass** es zwei Teile (70, 71) umfasst, die jeweils einen Rollengang umfassen, der mindestens eine Walze des oben genannten Typs umfasst, wobei diese beiden Teile (70, 71) mit einem Mittelteil (72), das eine Hydraulikeinheit umfasst, gelenkig verbunden sind.

21. Gerät nach einem der Ansprüche 1 bis 18,
**dadurch gekennzeichnet, dass** es Mittel zur Fernsteuerung über Kabelverbindung oder Funkverbindung umfasst.

22. Gerät nach einem der vorhergehenden Ansprüche,
**dadurch gekennzeichnet, dass** es mindestens eine Kamera (60) sowie Mittel umfasst, die notwendig sind, um Bilder auf den Lotsenbildschirm, der an Bord des Geräts angeordneten ist, in dem Fall zu übertragen, wobei es mit einer Lotsenkabine ausgestattet ist, oder in Entfernung von dem Gerät zu übertragen, insbesondere in dem Fall, wobei das Gerät ferngesteuert ist.

23. Gerät nach einem Anspruch 22,
**dadurch gekennzeichnet, dass** die oben genannte Kamera (60) feststehend ist oder zur fernsteuerbaren Orientierung ist.

24. Gerät nach einem der vorhergehenden Ansprüche,
**dadurch gekennzeichnet, dass** es eine oder mehrere Detektions-Vorrichtungen umfasst, wie magnetische Mittel, für manuelles Entminen die bekannt sind, oder andere Detektions-Vorrichtungen, wie geophysikalische Materialien, wie zum Beispiel Leitfähigkeitsmesser, derart, dass jedes nicht detonierte Gerät detektiert wird, damit dem Entminungspersonal im Hinblick auf manuelle Neutralisation ein Signal gegeben wird.

25. Gerät nach einem der vorhergehenden Ansprüche,
**dadurch gekennzeichnet, dass** es Mittel zur Markierung der Durchgangszonen des Geräts umfasst, zum Beispiel durch Ausstreuen einer sichtbaren Substanz, wie Kreide oder Kalk oder ein Farbstoff.

26. Gerät nach einem der vorhergehenden Ansprüche,
**dadurch gekennzeichnet, dass** es ein Programmiersystem der Trajektorien umfasst, das in das fahrzeugseitige System eingebaut ist, um die Auslenkungen des Geräts in einem Raum unter Garantie, dass es über jeden Punkt von diesem fährt, zu steuern.
